# EUROPEAN PATENT APPLICATION

(11) **EP 0 538 203 A1**
(43) Date of publication of application: **21.04.1993**
(21) Application number: 92830483.1
(22) Date of filing: 15.09.1992
(51) Int. Cl.: B29C 45/32

(54) **Plastic material molding apparatus including two symmetrically arranged molds**

(30) Priority: 15.10.1991 IT MI912718
(71) Applicant: F.LLI MARCHESI S.r.l., I-20060 Cassina De'Pecchi (Milano) (IT)
(72) Inventor: Marchesi, Pio, I-20060 Cassina de' Pecchi (Milano) (IT)
(74) Representative: Cicogna, Franco

(57) **Abstract**

The present invention relates to a plastic material molding apparatus including two symmetrically arranged molds, characterized in that it comprises a fixed central plate (10), associated with the supporting framework (1), and two further movable plates (11) which are symmetrically arranged at opposite positions with respect to the central plate (10).

The central plate (10) and movable plates (11) respectively support the female portions and the male portions of two molds. Means (30-32) are moreover provided for synchronously driving the movable plates (11), the driving means being in turn controlled by a single driving assembly (20).

## Description

### BACKGROUND OF THE INVENTION

The present invention relates to an apparatus for molding plastic materials, including two symmetrically arranged molds.

As is known there are commercially available several types of apparatus for molding plastic materials which, generally, are provided with a fixed plate and a movable plate, which movable plate can be driven away from and to the fixed plate, said plates supporting respectively the female portion and male portion of the mold.

This prior apparatus, however, have a comparatively small yield, since a single mold is used herein, and, moreover, in order to resist against comparatively high operating pressure, as the mold is closed, these apparatus must comprise large size frameworks.

On the other hand, the use of two conventional molds has not heretofore been possible, because of the great problem of synchronizing or timing the simultaneous displacemente of the two molds.

### SUMMARY OF THE INVENTION

Accordingly, the aim of the present invention is to solve the above mentioned problem by providing an apparatus for molding plastic materials, including two symmetrically arranged molds, which allows the molds to be driven with perfectly synchronized or timed movements, said molds being symmetrically arranged with respect to the central plate of the apparatus so as to provide a very good compensation of the forces (SANDWICH apparatus).

Within the scope of the above mentioned aim, a main object of the present invention is to provide such a plastic material molding apparatus including two opposite molds, which is adapted to easily resist against the operating pressure occurring as the molds of the apparatus are closed, while including a comparatively simple and small size supporting framework.

A further object of the present invention is to provide such a plastic material molding apparatus which can inject a ganulated plastic material into the molds by automatic means which are arranged outside of the outline of the apparatus.

Yet another object of the present invention is to provide such a plastic material molding apparatus, including two symmetrically arranged molds, which can be easily made starting from easily available elements and materials and which, accordingly, is very competitive from a mere economic standpoint.

According to one aspect of the present invention, the above mentioned aim and objects, as well as yet other objects, which will become more apparent hereinafter, are achieved by an apparatus for molding plastic material, including two symmetrically arranged molds, characterized in that said apparatus comprises a fixed central plate, associated with the supporting framework of the apparatus, and two movable plates which are symmetrically arranged at opposite positions with respect to the central plate.

The central plate and movable plates respectively support the female portions and male portions of two molds, means being moreover provided for synchronously driving the movable plates, said driving means being controlled by a single driving assembly.

### BRIEF DESCRIPTION OF THE DRAWINGS

Further characteristics and advantages of the invention will become more apparent hereinafter from the following detailed disclosure of a preferred, though not exclusive, embodiment of an apparatus for molding plastic material, including two symmetrically arranged molds, and which is illustrated, by way of an indicative but not limitative example, in the figures of the accompanying drawings, where:
Figure 1 is a side elevation view of the molding apparatus according to the invention;
Figure 2 is a side perspective view of the subject molding apparatus;

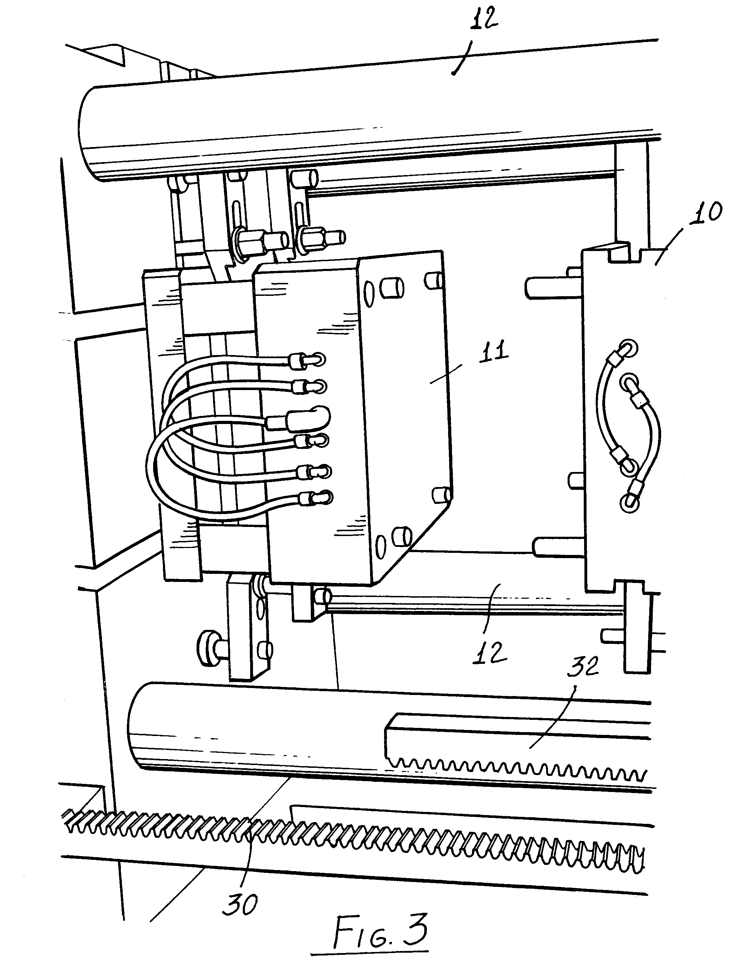

Figure 3 is a further perspective view illustrating the detail of a movable plate;
Figure 4 illustrates the rack means provided for driving the movable plates;
Figure 5 schematically illustrates the driving assembly including toggle means;
   and
Figure 6 illustrates a detail of the plastic material injection assembly.

### DESCRIPTION OF THE PREFERRED EMBODIMENT

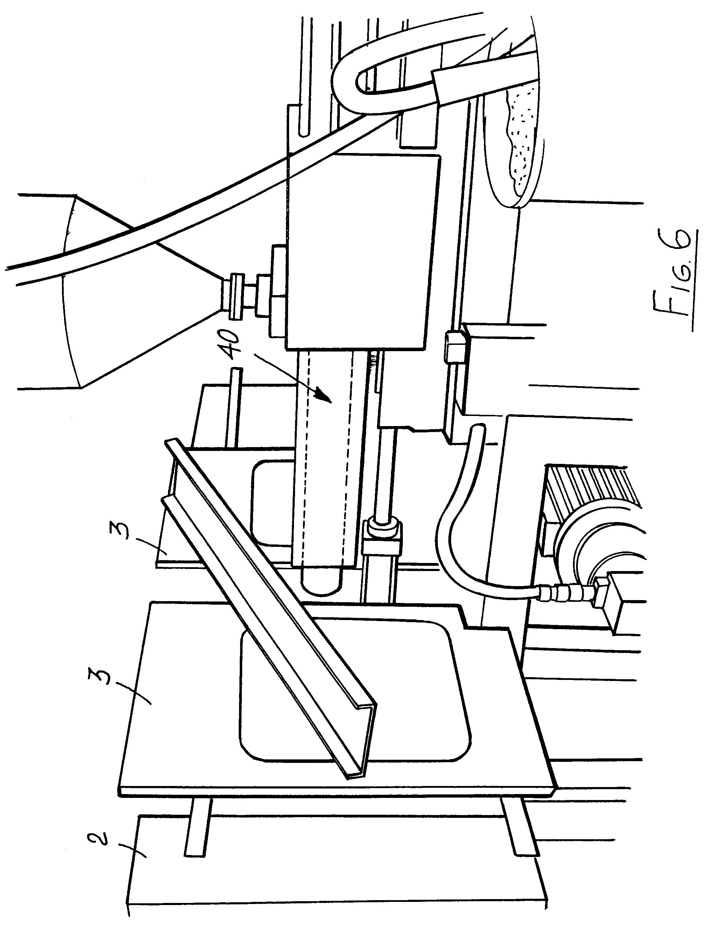

With reference to the figures of the accompanying drawings, the apparatus for molding plastic materials, including two symmetrically arranged molds, according to the present invention, comprises a supporting framework, generally indicated at the reference number 1, arranged inside a covering casing 2, provided with doors 3 for accessing the inside region of the apparatus (see Figure 6).

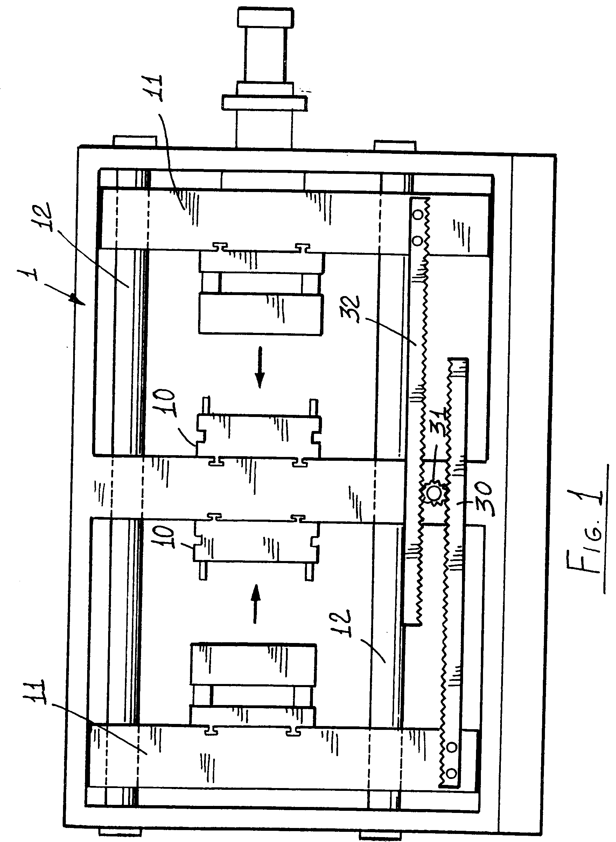

The supporting framework 1 supports a fixed central large size plate, generally indicated at the reference number 10, and a pair of large size movable plates 11, which are arranged symmetrically and in an opposite relationship with respect to the central plate 10 (see Figure 1).

More specifically, the central plate supports, on its two opposite faces, the female portions of two molds, whereas the movable plates support, each, the male portions of the molds with the means for removing the molded article from the molds.

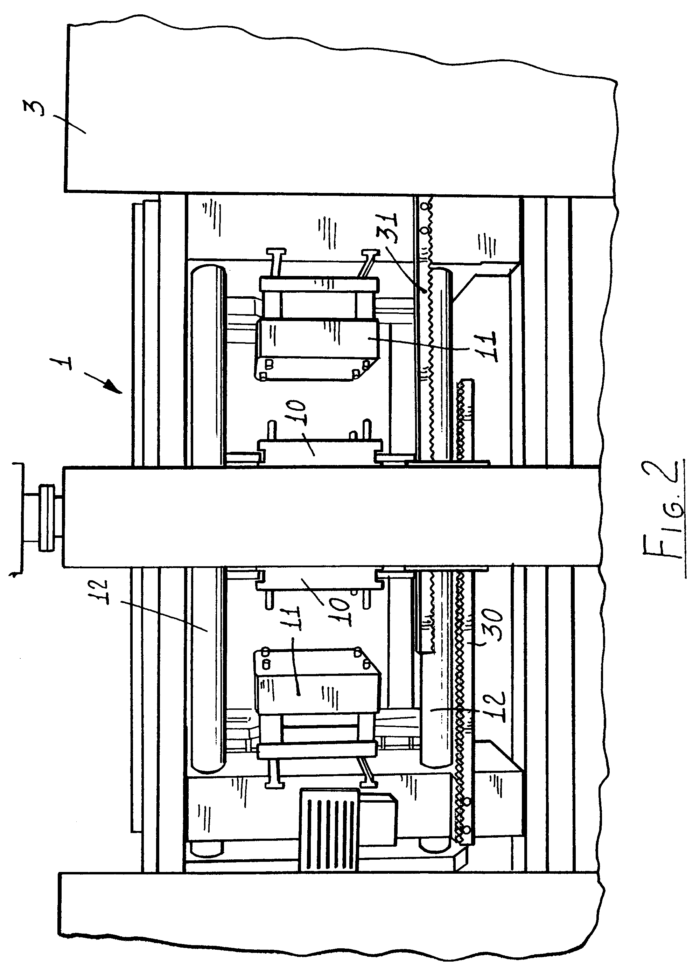

As shown, the movable plates slide on horizontal bars 12, and on auto-lubricating pads, and have the important feature of including means for displacing them with a synchronous or timed movement (Figures 1 and 2).

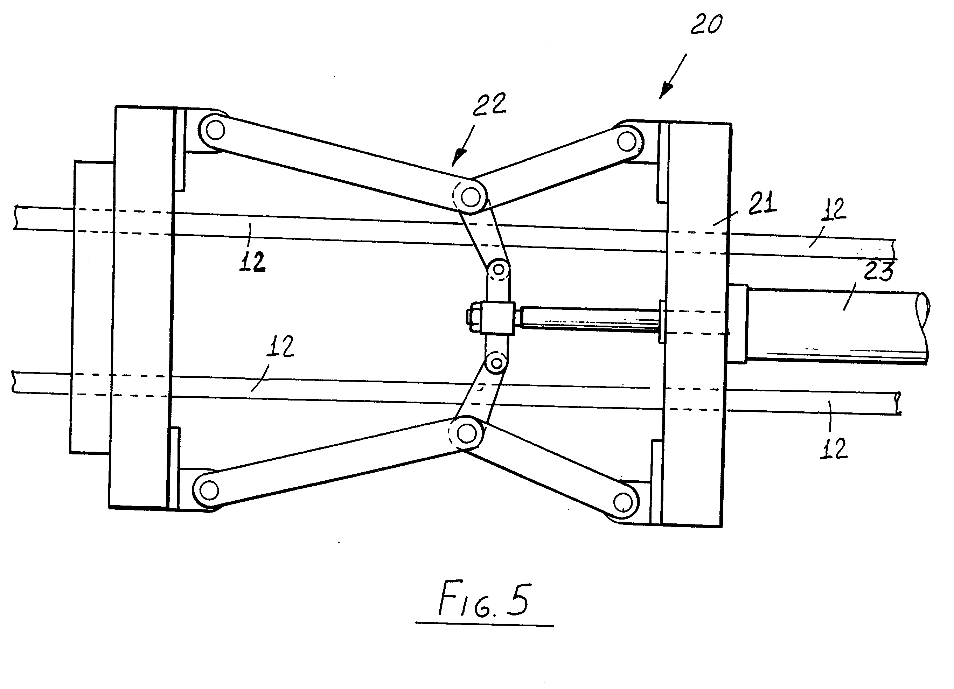

In particular, one of the mentioned movable plates is connected to a driving assembly, generally indicated at the reference number 20, including a movable shoulder 21, thereon operates a toggle assembly 22, driven by a piston 23, and which operates for alternately displacing one of the plates (see Figure 5).

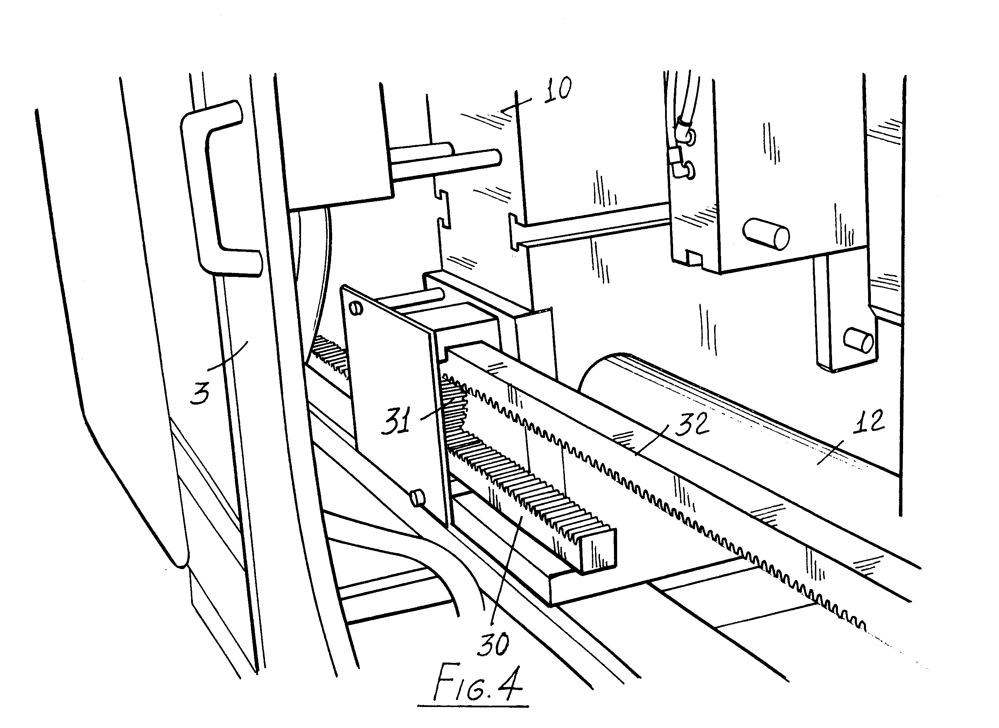

The proper timing of the movements of the two movable plates is obtained by means of a first rack 30, extending from one of the plates, which meshes with a reversing pinion 31, supported by the fixed framework at an intermediate portion thereof, which pinion, in turn, meshes with a second rack 32 connected to the other of the movable plates (see Figures 1, 2, 43, 4).

Thus, as a movable plate is driven, the movement of the rack associated therewith will be transmitted through the reversing pinion 31, to the other rack, so that a synchronous extremely accurate reciprocating movement will be always safely obtained (see Figure 1).

Moreover, by using opposite molds, the closure pressure of the molds will be compensated or mutually offset, so as not to stress the supporting framework.

Another main feature of the invention is that a plastic material injection assembly is moreover provided, comprising an injecting member 40, advantageously arranged outside of the apparatus framework and driven, in order to reach the molds supported by the central plate 10, with a movement along a direction which is perpendicular to the displacement direction of the molds (see Figure 6).

Thus, the plastic material injecting assembly will not obstruct the displacements of the molds and, moreover, since it is arranged with a perpendicular arrangement, it can be quickly and easily accessed.

From the above disclosure it should be apparent that the invention fully achieves the intended aim and objects.

In particular, the fact is to be pointed out that the apparatus for molding plastic materials, including two symmetrically arranged molds, according to the invention, affords the possibility of greatly reducing the working or opertion time, since it allows two molds to be simultaneously used, said molds being driven in a mutually opposite manner.

The invention as disclosed is susceptible to several modifications and variations all of which will come within the scope of the inventive idea.

Moreover, all of the details can be replaced by other technically equivalment elements.

In practicing the invention, the used materials, as well as the specific size and shapes can be any, according to requirements.

## Claims

1. An apparatus for molding plastic materials, including two symmetrically arranged molds, characterized in that said apparatus comprises a fixed central plate, associated with the apparatus supporting framework, and two further movable plates, aranged symmetrically at positions opposite to the central plate, said central plate and movable plates respectively supporting the female portions and male portions of said two molds, means being moreover provided for synchronously driving said movable plates under the control of a single driving assembly.

2. An apparatus for molding plastic materials according to Claim 1, characterized in that said means for synchronously driving said movable plates comprise a first rack, extending from one of said movable plates, and meshing with a reversing pinion, in turn meshing with a second rack extending from the other of said movable plates.

3. An apparatus for molding plastic materials according to Claims 1 and 2, characterized in that said first and second racks are arranged parallel to the displacement direction of the movable plates.

4. An apparatus for molding plastic materials according to one or more of the preceding claims, characterized in that said single driving assembly comprises a toggle assembly adapted to drive one of said movable plates.

5. An apparatus for molding plastic materials according to one or more of the preceding claims, characterized in that said apparatus further comprises a plastic material injecting member operating at said central plate and movable along a direction perpendicular to the displacement direction of said movable plates.
